# EUROPEAN PATENT APPLICATION

(11) **EP 4 848 756 A1**
(43) Date of publication of application: **02.12.2026**
(21) Application number: 25745042.9
(22) Date of filing: 20.01.2025
(51) Int. Cl.: H04R 7/04, B60J 1/00, B60J 1/18, B60R 11/02, H04R 1/00, H04R 1/02, H04R 7/02

(54) **GLASS DIAPHRAGM MODULE**

(30) Priority: 24.01.2024 JP 2024008920
(71) Applicant: AGC Inc., Chiyoda-ku Tokyo 100-8405 (JP)
(72) Inventor: SAKURAI, Kento, Tokyo 100-8405 (JP)
(74) Representative: TBK
(86) International application number: PCT/JP2025/001627
(87) International publication number: WO 2025/159058

(57) **Abstract**

A glass diaphragm module 10 includes a glass plate 12 constituting a window glass, a mount member 16 attached to an interior side of the glass plate 12, a vibration component 26 attached to the mount member 16, and a cover member 30 covering the vibration component 26 from the interior side and having plural through holes 32A formed therein.

## Description

### Technical Field

The present invention relates to a glass diaphragm module.

### Background Art

US 2012/0194916 A1 discloses a structure in which an exciter (vibration component) is attached to a window glass of a vehicle. In the structure of US 2012/0194916 A1, the exciter is attached to the masking portion of the peripheral end of the window glass so that the exciter is not noticeable.

### SUMMARY OF INVENTION

### Technical Problem

By covering a vibration component such as an exciter with an interior member or the like, it is possible to prevent a hand of an occupant from touching the vibration component, but since sound generated from glass is shielded by the interior member, there is a possibility that a desired sound volume cannot be obtained.

An object of the invention is to obtain a glass diaphragm module capable of suppressing touching by a hand of an occupant while maintaining a desired sound volume. Solution to Problem

A glass diaphragm module according to the invention includes a glass plate constituting a window glass, a mount member attached to an interior side of the glass plate, a vibration component attached to the mount member, and a cover member covering the vibration component from the interior side and having a plurality of through holes formed therein. Advantageous Effects of Invention

In the glass diaphragm module according to the invention, it is possible to suppress touching by a hand of an occupant while maintaining a desired sound volume.

### BRIEF DESCRIPTION OF DRAWINGS

Fig. 1 is a rear view illustrating a rear glass of a vehicle to which a glass diaphragm module according to a first embodiment is applied.
Fig. 2 is an enlarged cross-sectional view of a main part illustrating a cross section of the glass diaphragm module in an enlarged manner.
Fig. 3 is an enlarged cross-sectional view of a main part illustrating a cross section of a glass diaphragm module according to a second embodiment in an enlarged manner.
Fig. 4 is an enlarged cross-sectional view of a main part illustrating a cross section of a glass diaphragm module according to a third embodiment in an enlarged manner.
Fig. 5 is an enlarged cross-sectional view of a main part illustrating a cross section of a glass diaphragm module according to a fourth embodiment in an enlarged manner.
Fig. 6 is an enlarged cross-sectional view of a main part illustrating a cross section of a glass diaphragm module according to a fifth embodiment in an enlarged manner.
Fig. 7 is an enlarged cross-sectional view of a main part illustrating a cross section of a glass diaphragm module according to a sixth embodiment in an enlarged manner.
Fig. 8 is an enlarged cross-sectional view of a main part illustrating a cross section of a glass diaphragm module according to a seventh embodiment in an enlarged manner.
Fig. 9 is an enlarged cross-sectional view of a main part illustrating a cross section of a glass diaphragm module according to an eighth embodiment in an enlarged manner.
Fig. 10 is a plan view of a mount member in the eighth embodiment.
Fig. 11 is a plan view of a mount member in a ninth embodiment.
Fig. 12 is a rear view illustrating a rear glass of a vehicle to which a glass diaphragm module is applied.
Fig. 13 is an enlarged cross-sectional view of a main part illustrating a cross section of a glass diaphragm module according to a tenth embodiment in an enlarged manner.
Fig. 14 is a plan view of a mount member in an eleventh embodiment.
Fig. 15 is an enlarged cross-sectional view of a main part illustrating a cross section of a glass diaphragm module according to the eleventh embodiment in an enlarged manner.
Fig. 16 is an enlarged cross-sectional view of a main part illustrating a cross section of a glass diaphragm module according to a twelfth embodiment in an enlarged manner.
Fig. 17 is an enlarged cross-sectional view of a main part illustrating a cross section of a glass diaphragm module according to a thirteenth embodiment in an enlarged manner.
Fig. 18 is an enlarged cross-sectional view of a main part illustrating a cross section of a glass diaphragm module according to a fourteenth embodiment in an enlarged manner.
Fig. 19 is an enlarged cross-sectional view of a main part illustrating a cross section of a glass diaphragm module according to a fifteenth embodiment in an enlarged manner.
Fig. 20 is a rear view illustrating a roof glass of a vehicle to which a glass diaphragm module is applied.

### DESCRIPTION OF EMBODIMENTS

Hereinafter, a preferred embodiment of a glass diaphragm module according to the invention will be described with reference to the drawings. Although a case in which the glass diaphragm module is applied to the vehicle window glass will be described below, the glass diaphragm module according to the invention may be applied to a moving body such as an airplane, a helicopter, a ship, or a train regardless of a vehicle. The glass diaphragm module according to the invention may be applied to a window glass of a structure such as a building.

### <First Embodiment>

A glass diaphragm module 10 according to a first embodiment will be described with reference to the drawings.

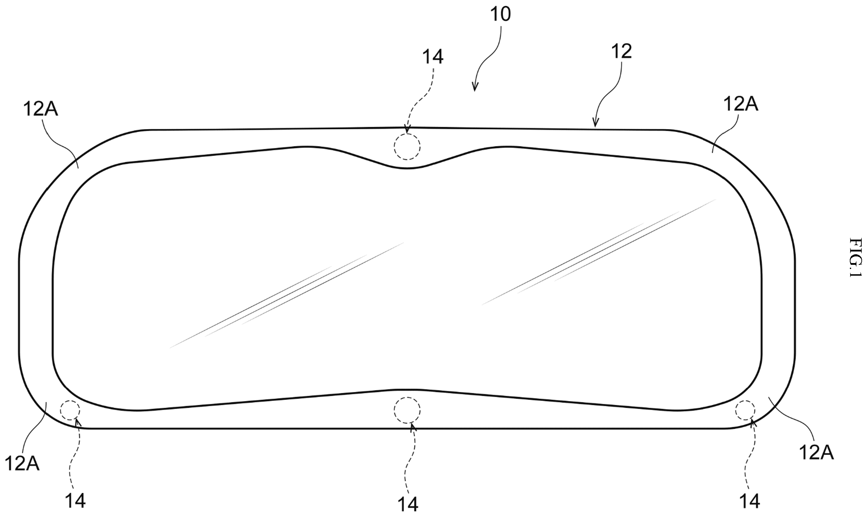

Fig. 1 is a schematic front view of the glass diaphragm module 10 as viewed from a principal surface side. As illustrated in Fig. 1, in this embodiment, the glass diaphragm module 10 is applied to a rear glass (back glass) of a vehicle. The glass diaphragm module 10 includes a rear glass 12 as a glass plate and a vibration module 14. In the following description, for convenience of description, an up-down direction (an up-down direction of the sheet of Fig. 1) in a case in which the glass diaphragm module 10 is viewed from a front is referred to as up-down, and a right-left direction (a right-left direction of the sheet of Fig. 1) is referred to as right-left.

The rear glass 12 constitutes a window glass of a vehicle, and is fixed to a vehicle body (not illustrated) in a state where it cannot be raised and lowered. The rear glass 12 is often single plate glass, but may be laminated glass in which two glass plates are bonded by a resin intermediate layer. The rear glass 12 is formed of transparent or translucent inorganic glass. As the inorganic glass, for example, soda-lime glass, aluminosilicate glass, borosilicate glass, alkali-free glass, quartz glass, and the like can be used.

In a case in which the rear glass 12 is inorganic glass and is single plate glass, the rear glass 12 is preferably tempered glass. The tempered glass is obtained by forming a compressive stress layer on a surface of glass, and may be either air-cooled tempered glass or chemically tempered glass. In a case in which the tempered glass is physically tempered glass (for example, air-cooled tempered glass), a compressive stress layer may be generated on the glass surface by a temperature difference between the glass surface and the inside of the glass by an operation other than slow cooling, such as rapid cooling of the glass plate uniformly heated in bending molding from a temperature near a softening point. In a case in which the tempered glass is chemically tempered glass, a compressive stress may be generated on the glass surface by an ion exchange method or the like after bending molding.

In a case in which the rear glass 12 is laminated glass in which two glass plates are bonded by a resin intermediate layer,
both of the two glass plates may be untempered glass, only one of the glass plates may be tempered glass, or both of the two glass plates may be tempered glass. When the two glass plates are both tempered glass, the two glass plates may be air-cooled tempered glass, or both glass plates may be chemically tempered glass, or one glass plate may be cooled tempered glass and the other glass plate may be chemically tempered glass.

The rear glass 12 may be formed of organic glass. As the organic glass, for example, a polymethyl methacrylate (PMMA)-based resin, a polycarbonate (PC)-based resin, a polystyrene (PS)-based resin, a polyethyleneterephthalate (PET)-based resin, a polyvinyl chloride (PVC)-based resin, a cellulose-based resin, and the like can be used.

In a case in which the rear glass 12 is one sheet of single plate glass, the thickness of the rear glass 12 is preferably 0.5 [mm] or more, more preferably 1.0 [mm] or more, and still more preferably 1.5 [mm] or more. As a result, rigidity and strength of the rear glass 12 are improved, and piston vibration is likely to occur. In a case in which the rear glass 12 is one sheet of single plate glass, the thickness of the rear glass 12 is preferably 10.0 [mm] or less, more preferably 7.0 [mm] or less, and still more preferably 5.0 [mm] or less from the viewpoint of reducing the weight of the glass diaphragm module 10.

In a case in which the rear glass 12 is configured as laminated glass in which two glass plates are bonded by a resin intermediate layer, the thickness of each of the pair of glass plates constituting the rear glass 12 is preferably 0.5 [mm] or more, more preferably 1.0 [mm] or more, and still more preferably 1.5 [mm] or more. The thicknesses of the pair of glass plates constituting the rear glass 12 may be the same or different, but are preferably the same from the viewpoint of stabilizing the sound pressure. The total thickness of the rear glass 12 is preferably 1.0 [mm] or more, more preferably 2.0 [mm] or more, and still more preferably 3.0 [mm] or more. From the viewpoint of reducing the weight of the glass diaphragm module 10, the thickness is preferably 10.0 [mm] or less, more preferably 8.0 [mm] or less, and still more preferably 6.0 [mm] or less.

Examples of the intermediate layer in the case of using the rear glass 12 as laminated glass include a transparent polyvinyl butyral (PVB)-based or ethylene-vinyl acetate copolymer (EVA)-based resin film, and a resin film containing a thermosetting adhesive material, such as silicone (PDMS)-based, polyurethane-based, fluorine-based, polyethylene terephthalate-based, or polycarbonate-based resin film. A material for enhancing sound insulation properties, a material for enhancing rigidity, a material for absorbing ultraviolet rays and infrared rays, and the like may be added to the intermediate layer. The intermediate layer may be a liquid or gel-like intermediate layer. Specific examples of the liquid intermediate layer include water, oil, an organic solvent, a liquid polymer, ionic liquid, and mixtures thereof. More specific examples thereof include propylene glycol, dipropylene glycol, tripropylene glycol, straight silicone oil (dimethyl silicone oil, methylphenyl silicone oil, methyl hydrogen silicone oil), modified silicone oil, acrylic acid-based polymer, liquid polybutadiene, glycerin paste, fluorine-based solvent, fluorine-based resin, acetone, ethanol, xylene, toluene, water, mineral oil, and mixtures thereof. Among them, it is preferable to contain at least one selected from the group consisting of propylene glycol, dimethyl silicone oil, methylphenyl silicone oil, methyl hydrogen silicone oil, and modified silicone oil, and it is more preferable to contain propylene glycol or silicone oil as a main component. Specific examples of the gel-like intermediate layer include carbon-based, fluorine-based, and silicone-based polymer materials. Specific examples thereof include ABS, AES, AS, CA, CN, CPE, EEA, EVA, EVOH, IO, PMMA, PMP, PP, PS, PVC, RB, TPA, TPE, TPEE, TPF, TPO, TPS, TPU, TPVC, AAS, ACS, PET, PPE, PA6, PA66, PBN, PBT, PC, POM, PPO, ETFE, FEP, LCP, PEEK, PEI, PES, PFA, PPS, PSV, PTFE, PVDF, silicone, polyurethane, PI, and PF. Alternatively, a composite material obtained by combining the above materials and the like can be mentioned. The above materials may be used singly or in combination of two or more kinds thereof. The thickness of the intermediate layer may be, for example, from 0.1 [µm] to 3.0 [mm], from 1.0 [µm] to 2.8 [mm], or from 3.0 [µm] to 2.6 [mm].

As an example, the rear glass 12 of this embodiment is formed in a substantially rectangular shape with the width direction of the vehicle as the longitudinal direction, and corner portions 12A are formed at four corners of the rear glass 12. In Fig. 1, the vibration module 14 is attached to the lower corner portion 12A among the four corner portions 12A, but the position where the vibration module 14 is attached is not limited. For example, the vibration module 14 may be attached to only one corner portion 12A among the four corner portions 12A, or the vibration module 14 may be attached to all the four corner portions 12A.

Although the vibration module 14 is attached to each of the upper end and the lower end of the center portion in the right-left direction of the rear glass 12, the vibration module 14 may be attached to only one of the upper end and the lower end. From the viewpoint of ensuring visibility, it is preferable to mount the vibration module 14 on the corner portion 12A of the rear glass 12. The end of the vibration module 14 is preferably within 1.0 [m], more preferably within 0.5 [m], and still more preferably within 0.1 [m] from the glass edge portion of the rear glass 12. In this manner, the vibration module 14 is provided on the peripheral edge of the rear glass 12.

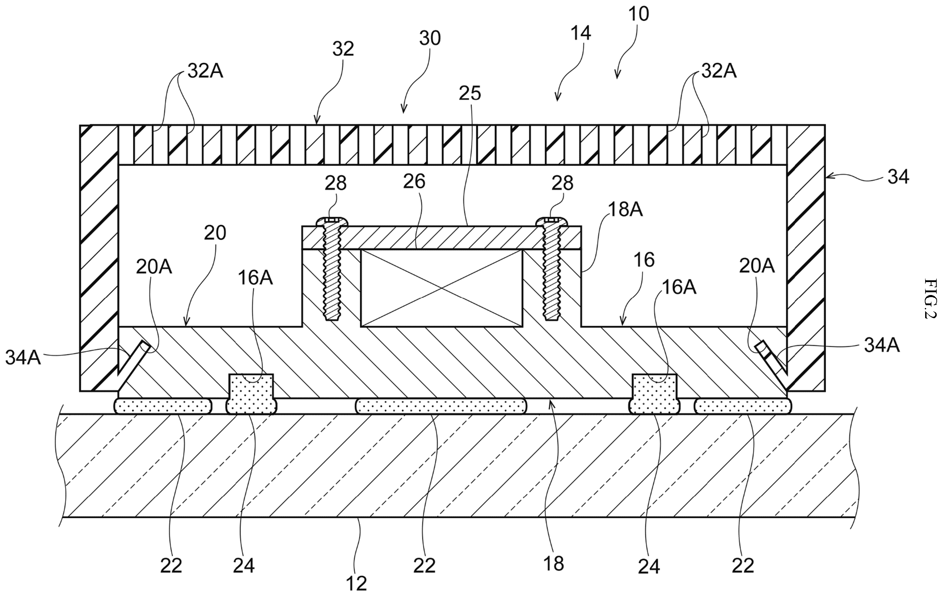

Fig. 2 is an enlarged cross-sectional view of a main part illustrating a cross section of the glass diaphragm module 10 in an enlarged manner. As illustrated in Fig. 2, the vibration module 14 is attached to the interior side (vehicle interior side) of the rear glass 12.

The vibration module 14 includes a mount member 16, a vibrator 26 as a vibration component, and a cover member 30. The mount member 16 includes a main body portion 18 and an extension portion 20, and the extension portion 20 extends from the main body portion 18 to the outer peripheral side.

The mount member 16 may be formed of metal including stainless steel, aluminum, titanium, or the like, and at least a part of the mount member 16 may be formed of resin such as plastic. As the plastic, a general engineering plastic such as an ABS type, a PVC type, a PC type, a PP type, a PBT type, a PA66 type, or a PPS type may be used, or a fiber-reinforced plastic containing glass fibers or carbon fibers may be used.

The thickness of the main body portion 18 of the mount member 16 is preferably 50 [mm] or less, more preferably 30 [mm] or less, still more preferably 20 [mm] or less, particularly preferably 10 [mm] or less from the viewpoint that the height can be reduced as the thickness is thinner. The main body portion 18 is formed in a flat columnar shape, but may be formed in a shape other than a circular shape in plan view, for example, may be formed in a rectangular shape or a polygonal shape.

The size of the main body portion 18 is preferably larger from the viewpoint of firmly attaching the vibrator 26, and the diameter is preferably 5 [mm] or more, more preferably 10 [mm] or more, still more preferably 15 [mm] or more, and particularly preferably 20 [mm] or more.

The diameter of the main body portion 18 is preferably 500 [mm] or less, more preferably 300 [mm] or less, still more preferably 200 [mm] or less, and particularly preferably 100 [mm] or less from the viewpoint that deterioration of design property can be suppressed as the diameter is smaller.

The main body portion 18 may include an energizing mechanism such as a terminal or a connector for energizing the wiring of the vibrator 26.

The mount member 16 is attached to the rear glass 12 via a first adhesive layer 22 and a second adhesive layer 24. As the first adhesive layer 22, a bonding adhesive or the like can be appropriately used. As the bonding adhesive, for example, an adhesive tape formed in a sheet shape can be used. As the second adhesive layer 24, an adhesive or the like can be appropriately used. As the adhesive, for example, materials such as acrylic-based, silicone-based, urethane-based, epoxy-based, phenol-based, and epoxy-silicone-based materials may be used. An adhesive having thermosetting properties, moisture curability, two-liquid mixing curability, ultraviolet curability, visible light curability, anaerobic curability, and the like can be used.

The first adhesive layer 22 is provided in each of a central portion and an outer peripheral portion of the mount member 16. The second adhesive layer 24 is provided in a portion between the central portion and the outer peripheral portion of the mount member 16. On the surface of the mount member 16 on the rear glass 12 side, a recess 16A into which the second adhesive layer 24 enters is formed.

The thickness of the first adhesive layer 22 may be 3.0 [mm] or less, preferably 1.0 [mm] or less, more preferably 0.5 [mm] or less, and particularly preferably 0.2 [mm] or less because vibration from the vibrator 26 can be effectively transmitted to the rear glass 12 as the thickness is thinner.

In a case in which the rear glass 12 includes a conductive wire (such as a defogger or an antenna) formed by printing and baking a paste (such as a silver paste) containing a conductive metal on the main surface on the vehicle interior side, the vibrator 26 and the mount member 16 are preferably attached so as not to overlap the conductive wire.

The rear glass 12 may be coated with a coating material. As the coating material, a low emissivity (low-E) material, an anti-glare (AG) coating material, an anti-reflection (AR) coating material, an anti-fingerprint (AF) coating material, an ultraviolet (UV) cut coating material, an antifogging coating material, an antifungal coating material, a water-repellent coating material, and the like may be used.

The rear glass 12 may be a color glass baked in blue, red, green, gray, or the like, or may be dimming glass. In a case in which the rear glass 12 is dimming glass, the rear glass 12 may be laminated glass, and a dimming film that electrically varies visible light transmittance may be sandwiched between two glass plates. As the dimming film, for example, a dimming film made of a polymer dispersed liquid crystal (PDLC) film, an electrochromic material, a photochromic material, or the like can be used for being sealed in laminated glass.

On the peripheral end portion of the rear glass 12, a light shielding layer having a predetermined width formed of a color ceramic layer of black, dark, white, or the like, a color ink layer on which an organic ink or an inorganic ink is printed, or the like may be provided. The light shielding layer is continuously provided over the entire circumference along the outer peripheral end portion of the rear glass 12, but may have a region not including the light shielding layer in at least a part thereof. The light shielding layer prevents an adhesive or the like from being visually recognized from the outside of the vehicle. A defogger (not illustrated) for removing fogging (for defogging) may be formed on a surface of the rear glass 12 on the vehicle interior side. The defogger includes a plurality of heater wires extending in the width direction of the rear glass 12 and two bus bars extending in the up-down direction, and a number of heater wires are formed between the two bus bars. The defogger is formed by printing and baking a silver paste containing silver powder and glass frit on the surface of the rear glass 12. The mount member 16 is preferably attached so as not to overlap the two bus bars and the heater wire.

The vibrator 26 as a vibration component is attached to the main body portion 18. In this embodiment, a side wall portion 18A protruding from the main body portion 18 toward the interior side is formed, and the vibrator 26 is accommodated in a region surrounded by the side wall portion 18A. A space in which the vibrator 26 is accommodated is closed by a lid member 25. The lid member 25 is formed in a flat plate shape and is fastened to the side wall portion 18A of the main body portion 18 by a bolt 28, and the vibrator 26 is sandwiched between the main body portion 18 and the lid member 25.

The structure for attaching the vibrator 26 to the main body portion 18 is not particularly limited, and a structure for mechanically fastening such as a bolt, a claw, a clip, or a rivet may be adopted. A slide groove may be formed in one of the main body portion 18 and the vibrator 26, a protrusion to be engaged with the slide groove may be formed in the other one, and the main body portion and the vibrator may be fastened by sliding. The vibrator 26 may be attached to the main body portion 18 via an adhesive interface of tape, adhesive, felt, foam, rubber, grease, gel, plastic, or the like.

The vibrator 26 is an actuator that is connected to a power supply (not illustrated) and vibrates the rear glass 12 as a glass plate constituent according to an input electric signal. As an example, the vibrator 26 of this embodiment is a voice coil motor including a coil portion and a magnetic circuit, and one of the coil portion and the magnetic circuit is fixed to the rear glass 12 and the other is arranged to be relatively movable with respect to the rear glass 12. In a case in which the current flows through the coil portion, vibration is generated by the interaction between the coil portion and the magnetic circuit, and the rear glass 12 is vibrated (excited) via the mount member 16. The vibration direction is a thickness direction of the vibrator 26. The vibrator 26 is not limited to the voice coil motor, and an actuator other than the voice coil motor, such as a piezo actuator, can be adopted as long as the actuator can transmit desired vibration to the rear glass 12. Although the vibrator 26 is attached to the main body portion 18 in this embodiment, a speaker such as a tweeter may be attached to the main body portion 18 as another vibration component. Both the vibrator 26 and the speaker may be attached to the main body portion 18.

The extension portion 20 of the mount member 16 extends from the main body portion 18 to the outer peripheral side, and the cover member 30 is attached to the extension portion 20. A shape of the extension portion 20 is not particularly limited. For example, the extension portion 20 may be formed in a substantially annular shape surrounding the outer periphery of the main body portion 18. The extension portion 20 may include a plurality of arm portions extending from the main body portion 18 to the outer peripheral side.

An engagement groove portion 20A is formed in an outer peripheral end portion of the extension portion 20, and an engagement claw 34A of the cover member 30 is engaged with the engagement groove portion 20A.

The cover member 30 is formed in a substantially C shape in which the rear glass 12 side is opened in a cross-sectional view as viewed from the radial direction of the vibration module 14, and includes a main surface portion 32 covering the vibrator 26 from the vehicle interior side, and a peripheral wall portion 34 extending from an outer peripheral end portion of the main surface portion 32 toward the mount member 16.

The shape of the cover member 30 is not limited thereto, and is not particularly limited. For example, the cover member 30 may be formed in a dome shape.

The engagement claw 34A protrudes inward at the distal end of the peripheral wall portion 34, and the cover member 30 is attached to the main body portion 18 (mount member 16) by engaging the engagement claw 34A with the engagement groove portion 20A of the main body portion 18. A method of attaching the cover member 30 and the main body portion 18 is not particularly limited, and the cover member may be mechanically fastened to a fastening point provided in advance. The cover member 30 and the main body portion 18 may be fixed by a leaf spring so as not to rattle. As a machine fastening method, a method such as a screw, a claw, or a key is used, but it is preferable to adopt a one-touch structure for convenience of service. It is more preferable to provide a return mechanism such as a spring in terms of mounting work.

Here, a plurality of through holes 32A are formed in the main surface portion 32 of the cover member 30. The size of the through hole 32A is preferably a gap of 0.1 [mm²] or more, more preferably a gap of 1 [mm²] or more, and still more preferably a gap of 3 [mm²] in order not to inhibit vibration from the rear glass 12 and the vibrator 26. In a case in which the through hole 32A is too large, there is a risk at the time of falling of the actuator, and thus the through hole is preferably 100 [mm²] or less, more preferably 50 [mm²] or less, and still more preferably 30 [mm²] or less.

The main surface portion 32 of the cover member 30 may be formed in a mesh shape. In this case, the opening area can be increased as compared with a configuration in which the plurality of through holes 32A are formed, which is preferable from the viewpoint of heat dissipation and the like.

A material for the cover member 30 is not particularly limited, and the cover member 30 may be formed of metal or resin. The Young's modulus of the cover member 30 is preferably 10⁵ [Pa] or more, more preferably 10⁶ [Pa], and still more preferably 10⁷ [Pa] or more from the viewpoint of securing strength. From the viewpoint of processability and moldability, the Young's modulus of the cover member 30 is preferably 10¹² [Pa] or less.

On the surface of the cover member 30, characters and logos may be printed so that information such as the product name of the vibration module 14, the name of a manufacturer of the vibration module 14 and the cover member 30, glass, an automobile company, a building material manufacturer, a system manufacturer, or the like, the product name of the cover member 30, and the brand name, the date of manufacture, the place of manufacture, and the production management number of the product can be identified.

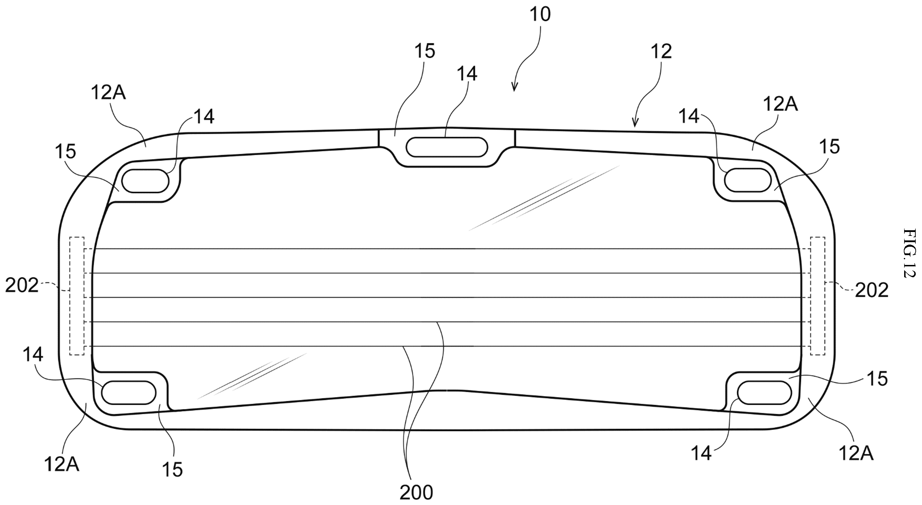

As illustrated in Fig. 12, on the surface on the vehicle outer side of the rear glass 12, a decorative member 15 may be attached so as to overlap with a region where the vibration module 14 is attached in front view. In a case in which the decorative member 15 is attached to the surface on the vehicle outer side of the rear glass 12 so as to overlap with a region where the vibration module 14 is attached in front view, the vibration module 14, the main body portion 18 (mount member 16), and the cover member 30 cannot be visually recognized from the outside of the vehicle, which is preferable in appearance. Identifiable characters and logos such as a vehicle manufacturer name and a vehicle name may be printed on the decorative member 15. In the drawing, reference numeral 200 denotes a heating wire, and reference numeral 202 denotes a bus bar.

### <Second Embodiment>

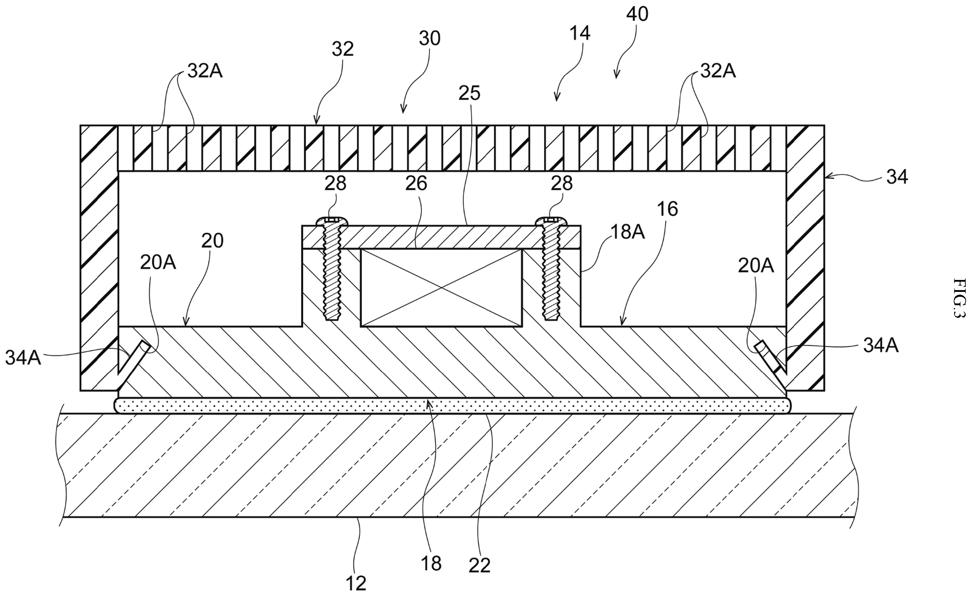

A glass diaphragm module 40 according to a second embodiment will be described with reference to Fig. 3. The same components as those of the first embodiment are denoted by the same reference numerals, and the description thereof will be omitted as appropriate.

Fig. 3 is an enlarged cross section of a main part illustrating the glass diaphragm module 40 according to the second embodiment. As illustrated in Fig. 3, in this embodiment, the mount member 16 is attached to the rear glass 12 via only the first adhesive layer 22. As the first adhesive layer 22, the same materials as those of the first embodiment can be listed.

The first adhesive layer 22 is provided over the entire surface of the mount member 16 on the rear glass 12 side. For this reason, it is not necessary to form the recess 16A for the second adhesive layer 24 to enter in the mount member 16.

### <Third Embodiment>

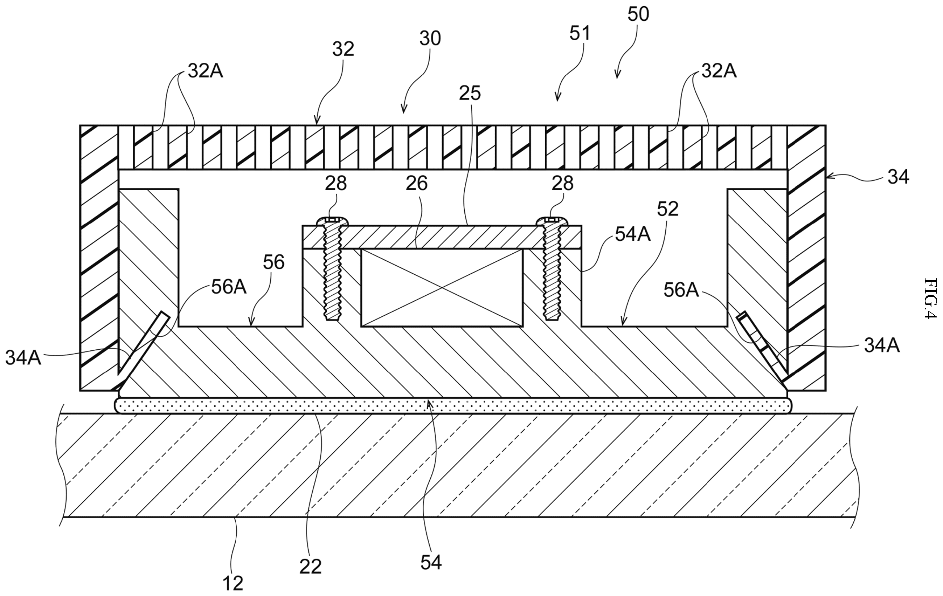

A glass diaphragm module 50 according to a third embodiment will be described with reference to Fig. 4. The same components as those of the first embodiment and the second embodiment are denoted by the same reference numerals, and the description thereof will be omitted as appropriate.

Fig. 4 is an enlarged cross section of a main part illustrating the glass diaphragm module 50 according to the third embodiment. As illustrated in Fig. 4, in this embodiment, the shape of a mount member 52 constituting a vibration module 51 is different from that of the second embodiment.

The mount member 52 includes a main body portion 54 and an extension portion 56, and the extension portion 56 extends from the main body portion 54 to the outer peripheral side. A side wall portion 54A protrudes from the main body portion 54 toward the interior side, and the vibrator 26 is accommodated in a region surrounded by the side wall portion 54A.

In this embodiment, the outer peripheral end portion of the extension portion 56 is formed to be thicker than the other portions. An engagement groove portion 56A is formed in the extension portion 56, and an engagement claw 34A of the cover member 30 is engaged with the engagement groove portion 56A.

In this embodiment, the attachment strength of the cover member 30 can be improved by thickening the portion of the extension portion 56 engaged with the engagement claw 34A.

### <Fourth Embodiment>

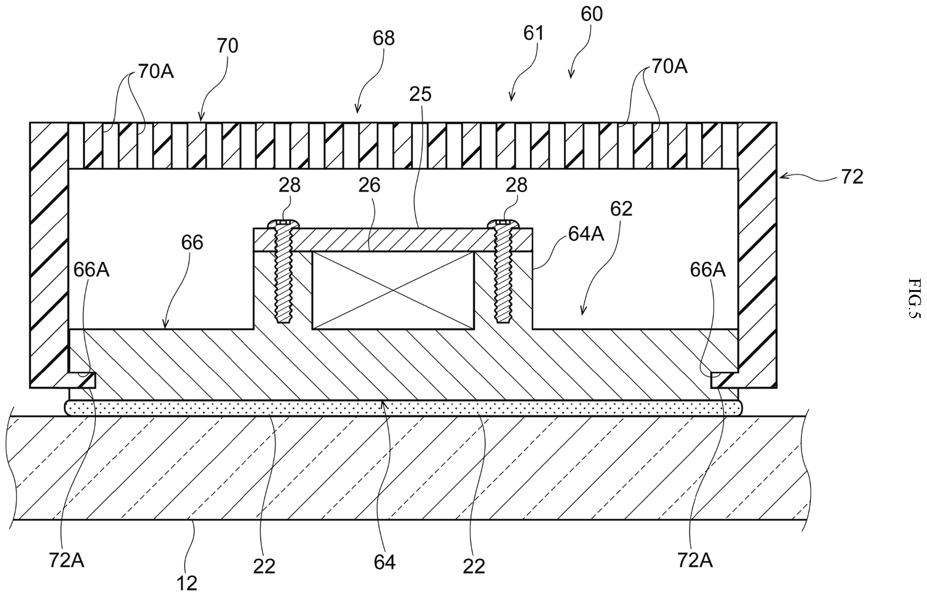

A glass diaphragm module 60 according to a fourth embodiment will be described with reference to Fig. 5. The same components as those of the first embodiment and the second embodiment are denoted by the same reference numerals, and the description thereof will be omitted as appropriate.

Fig. 5 is an enlarged cross section of a main part illustrating the glass diaphragm module 60 according to the fourth embodiment. As illustrated in Fig. 5, in this embodiment, the shape of a mount member 62 constituting a vibration module 61 is different from that of the second embodiment.

The mount member 62 includes a main body portion 64 and an extension portion 66, and the extension portion 66 extends from the main body portion 64 to the outer peripheral side. A side wall portion 64A protrudes from the main body portion 64 toward the interior side, and the vibrator 26 is accommodated in a region surrounded by the side wall portion 64A.

In this embodiment, a guide groove 66A to be engaged with a cover member 68 is formed at the outer peripheral end portion of the extension portion 66. The cover member 68 is formed in a substantially C shape in which the rear glass 12 side is opened in a cross-sectional view as viewed from the radial direction of the vibration module 61, and includes a main surface portion 70 covering the vibrator 26 from the vehicle interior side, and a peripheral wall portion 72 extending from an outer peripheral end portion of the main surface portion 70 toward the mount member 62.

A protrusion 72A to be engaged with the guide groove 66A is formed at a distal end of the peripheral wall portion 72, and the cover member 68 is attached to the mount member 62 by sliding the protrusion 72A along the guide groove 66A. A plurality of through holes 70A are formed in the main surface portion 70.

In this embodiment, the cover member 68 can be attached to the mount member 62 only by sliding. The extension portion 66 of the mount member 62 may be formed thick as in the third embodiment.

### <Fifth Embodiment>

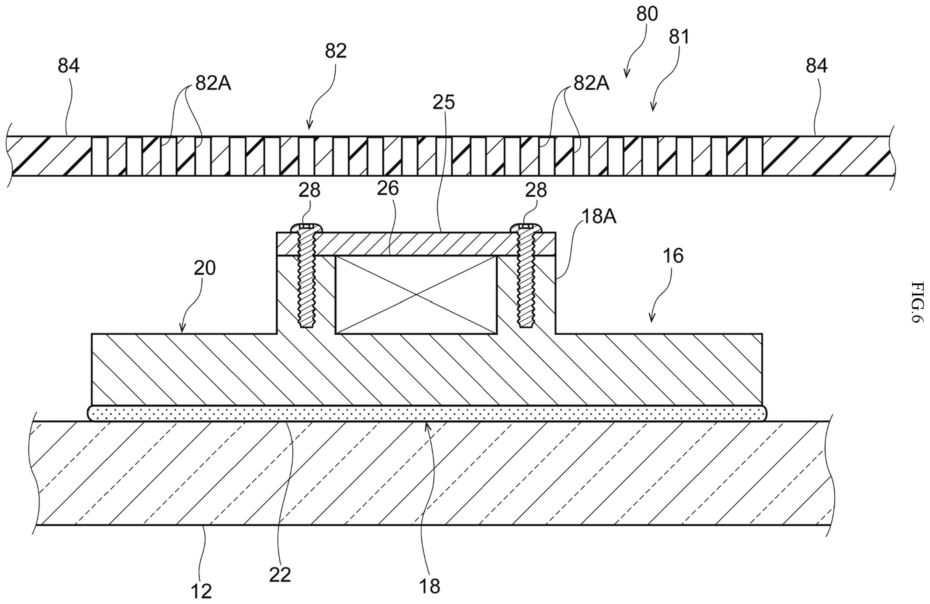

A glass diaphragm module 80 according to a fifth embodiment will be described with reference to Fig. 6. The same components as those of the first embodiment and the second embodiment are denoted by the same reference numerals, and the description thereof will be omitted as appropriate.

Fig. 6 is an enlarged cross section of a main part illustrating the glass diaphragm module 80 according to the fifth embodiment. As illustrated in Fig. 6, in this embodiment, a cover member 82 is not directly attached to the mount member 16 constituting a vibration module 81. For this reason, although the engagement groove portion 20A is not formed at the outer peripheral end portion of the extension portion 20 of the mount member 16, the engagement groove portion 20A may be provided as in the first embodiment.

The cover member 82 is attached to an interior member 84 provided around the rear glass 12. An attachment hole 84A to which the cover member 82 can be attached is formed in the interior member 84, and the cover member 82 is fitted into the attachment hole 84A. The interior member 84 may include a guide portion that facilitates fitting of the cover member 82.

The cover member 82 is disposed at a position to cover the vibrator 26 from the interior side, and a large number of through holes 82A are formed in the cover member 82. The size of the through hole 82A may be the same as or different from that of the first embodiment. In this embodiment, it is not necessary to directly attach the cover member 82 to the mount member 16.

### <Sixth Embodiment>

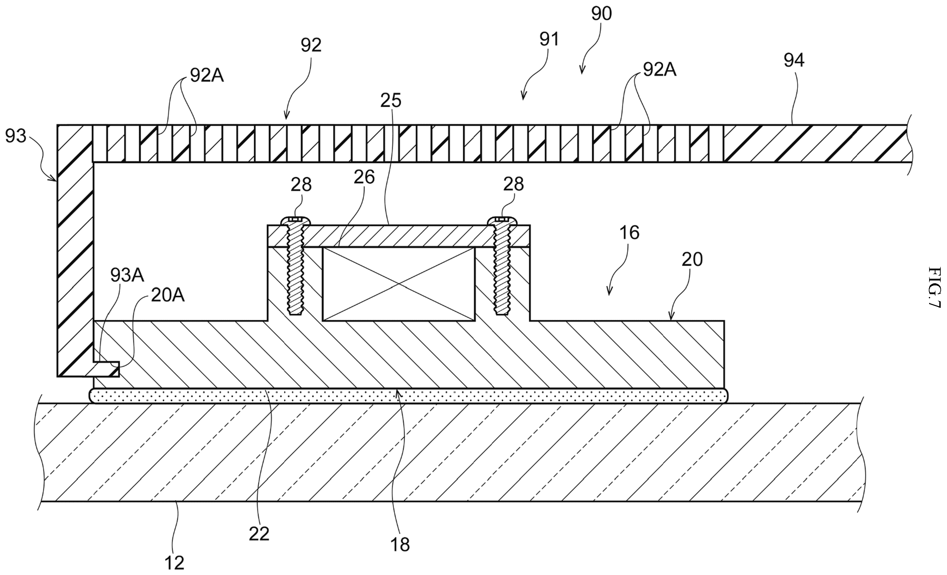

A glass diaphragm module 90 according to a sixth embodiment will be described with reference to Fig. 7. The same components as those of the first embodiment and the second embodiment are denoted by the same reference numerals, and the description thereof will be omitted as appropriate.

Fig. 7 is an enlarged cross section of a main part illustrating the glass diaphragm module 90 according to the sixth embodiment. As illustrated in Fig. 7, in this embodiment, a cover member is partially attached to the mount member 16 constituting a vibration module 91. Specifically, the engagement groove portion 20A is formed only in a part of the outer peripheral end portion of the extension portion 20 of the mount member 16.

A cover member 92 is formed in a substantially L shape in cross-sectional view, and is formed integrally with an interior member 94. A plurality of through holes 92A are formed in a portion of the cover member 92 covering the vibrator 26.

A peripheral wall portion 93 extends downward from one end of the cover member 92, and an engagement claw 93A is formed at a distal end of the peripheral wall portion 93. The engagement claw 93A is engaged with the engagement groove portion 20A formed in the extension portion 20 of the mount member 16. In this manner, the cover member 92 is attached to the mount member 16.

In this embodiment, since the cover member 92 and the interior member 94 are integrally formed, the number of man-hours for assembling the cover member 92 with the interior member 94 can be reduced.

### <Seventh Embodiment>

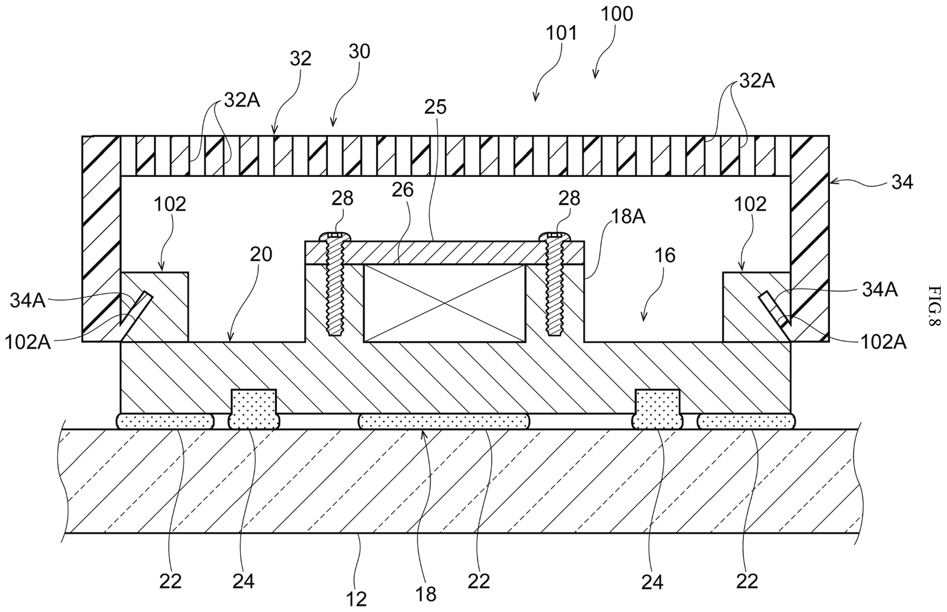

A glass diaphragm module 100 according to a seventh embodiment will be described with reference to Fig. 8. The same components as those of the first embodiment and the second embodiment are denoted by the same reference numerals, and the description thereof will be omitted as appropriate.

Fig. 8 is an enlarged cross section of a main part illustrating the glass diaphragm module 100 according to the seventh embodiment. As illustrated in Fig. 8, in this embodiment, the mount member 16 constituting the vibration module 101 is provided with a bracket 102, and the cover member 30 is attached to the bracket 102.

The bracket 102 may be continuously disposed along the outer peripheral end portion of the mount member 16, or may be disposed at a plurality of places on the upper surface of the mount member 16.

A method of attaching the bracket 102 and the mount member 16 is not particularly limited. For example, the bracket 102 may be attached to the mount member 16 via an adhesive layer. The bracket 102 may be mechanically fastened to the mount member 16 by bolts, rivets, or the like.

An engagement groove portion 102A is formed in the bracket 102, and the engagement claw 34A of the cover member 30 is engaged with the engagement groove portion 102A.

In this embodiment, since the cover member 30 is not attached to the bracket 102 itself, versatility of the bracket 102 can be enhanced.

### <Eighth Embodiment>

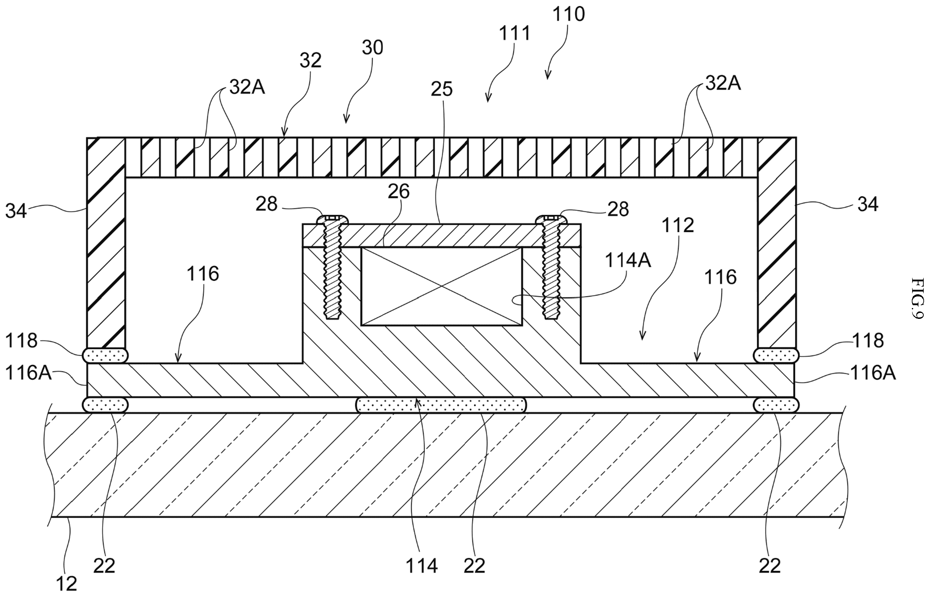

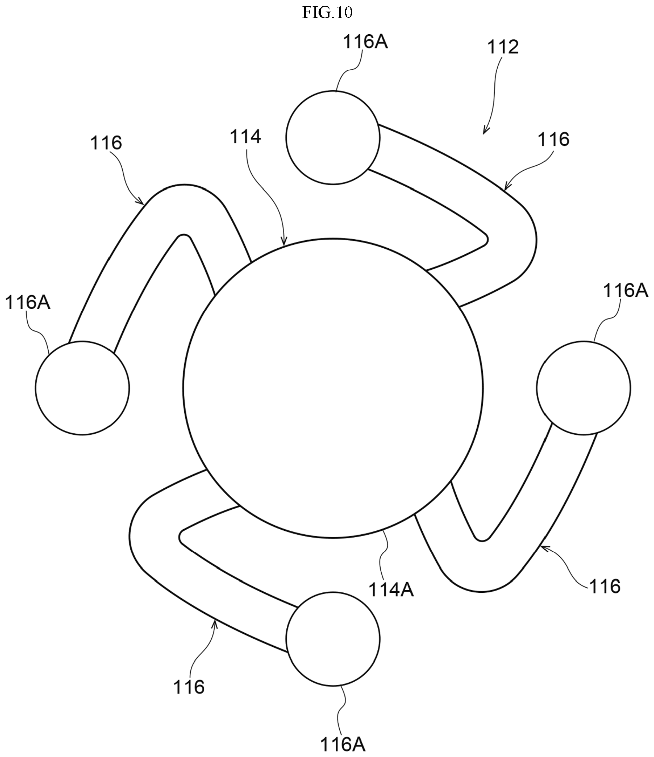

A glass diaphragm module 110 according to an eighth embodiment will be described with reference to Figs. 9 and 10. The same components as those of the first embodiment and the second embodiment are denoted by the same reference numerals, and the description thereof will be omitted as appropriate.

Fig. 9 is an enlarged cross section of a main part illustrating the glass diaphragm module 110 according to the eighth embodiment. As illustrated in Fig. 9, in this embodiment, a mount member 112 constituting a vibration module 111 includes a main body portion 114 to which the vibrator 26 is attached, and a flexible arm portion 116 extending from the main body portion 114 to the outer peripheral side.

Fig. 10 is a plan view of the mount member 112 in the eighth embodiment. As illustrated in Fig. 10, the main body portion 114 is formed in a substantially circular shape, and a recess 114A in which the vibrator 26 is accommodated is formed at a central portion of the main body portion 114.

A plurality of the arm portions 116 are provided at intervals along the outer periphery of the main body portion 114. In this embodiment, four arm portions 116 extend from the main body portion 114 to the outer peripheral side. Each arm portion 116 is formed to be thinner than the main body portion 114 and has flexibility. A fastening portion 116A is formed at a distal end of the arm portion 116, and the cover member 30 is attached to the fastening portion 116A.

As a material for the arm portion 116, similarly to the mount, the arm portion may be formed of metal including stainless steel, aluminum, titanium, or the like, and at least a part of the mount member 16 may be formed of resin such as plastic. As the plastic, a general engineering plastic such as an ABS type, a PVC type, a PC type, a PP type, a PBT type, a PA66 type, or a PPS type may be used, or a fiber-reinforced plastic containing glass fibers or carbon fibers may be used.

In addition to the above, a material having higher flexibility can be selected, and it is more preferable to use at least one or more of rubber, felt, film, wire mesh, woven steel, or the like. For example, the arm portion may be formed of a metal containing stainless steel, aluminum, titanium, copper, silver, gold, tungsten, zinc, or the like, or may be formed of a resin material containing epoxy, acrylic, urethane, silicone, fluorine, or the like in addition to the engineering plastic. The arm portion may be formed of a composite material with a fibrous material such as a nylon-based material, a rayon-based material, a polyamide-based material, a cellulose-based material, a polyurethane-based material, a polypropylene-based material, a polyether-based material, a polyether ester-based material, a polyethylene-based material, a polyphenol-based material, an aramid-based material, a carbon fiber, a glass fiber, a ceramic fiber, or a metal fiber.

The thickness of the arm portion 116 is preferably 50 [mm] or less, more preferably 20 [mm] or less, and still more preferably 10 [mm] or less. The thickness is preferably 0.001 [mm] or more, more preferably 0.01 [mm] or more, and still more preferably 0.1 [mm] or more, because in a case in which the thickness is too thin, the yield at the time of molding processing is lowered. The arm portion 116 may have an easily deformable portion having a spring shape, a mesh shape, a woven fabric shape, a porous shape, or the like that is easily elastically deformed or bent.

As illustrated in Fig. 9, the main body portion 114 of the mount member 112 is attached to the rear glass 12 by the first adhesive layer 22. Similarly, the fastening portion 116A of the arm portion 116 is also attached to the rear glass 12 by the first adhesive layer 22. The entire arm portion 116 may be attached to the rear glass 12 by the first adhesive layer 22.

In Fig. 9, the rear glass 12 is illustrated in a substantially flat plate shape, but may be curved. In this case, the flexible arm portion 116 bends following the curved surface of the rear glass 12, whereby the mount member 112 can be attached to the rear glass 12.

The cover member 30 includes the main surface portion 32 covering the vibrator 26 from the vehicle interior side, and the peripheral wall portion 34 extending from the outer peripheral end portion of the main surface portion 32 toward the mount member 16, and the distal end of the peripheral wall portion 34 is attached to the fastening portion 116A of the arm portion 116 via a third adhesive layer 118. The arm portion 116 may be attached to the fastening portion 116 by a method other than the adhesive layer.

In this embodiment, even in a case in which the rear glass 12 of the vehicle has a curved surface, the mount member 112 can be attached following the curved surface.

### <Ninth Embodiment>

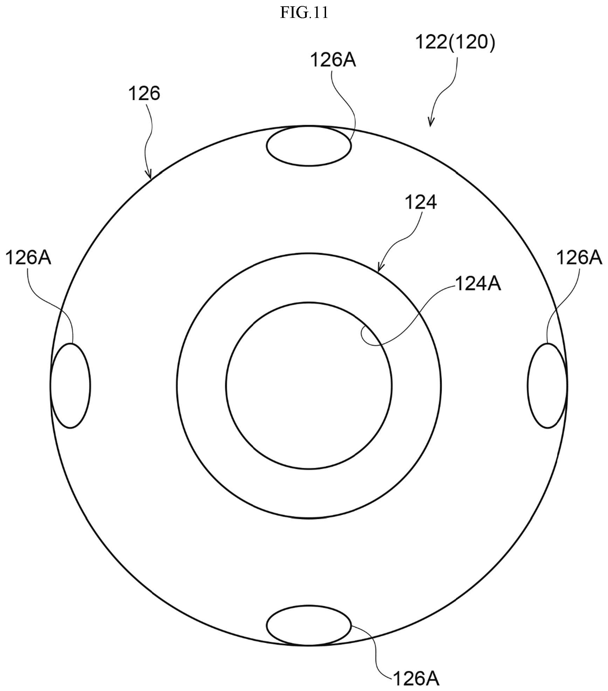

A glass diaphragm module 120 according to a ninth embodiment will be described with reference to Fig. 11. The same components as those of the eighth embodiment are denoted by the same reference numerals, and the description thereof will be omitted as appropriate. This embodiment has the same configuration as the eighth embodiment except for the mount member 122.

Fig. 11 is an enlarged cross section of a main part illustrating the mount member 122 constituting the glass diaphragm module 120 according to the ninth embodiment. As illustrated in Fig. 11, in this embodiment, a mount member 122 includes a main body portion 124 to which the vibrator 26 is attached, and a flexible thin portion 126 extending from the main body portion 124 to the outer peripheral side.

The main body portion 124 is formed in a substantially circular shape, and a recess 124A in which the vibrator 26 is accommodated is formed at a central portion of the main body portion 124.

The thin portion 126 is formed in a thin plate shape having a thickness smaller than that of the main body portion 124, and has flexibility. The thin portion 126 is concentrically formed with respect to the main body portion 124, and fastening portions 126A to which a cover member is attached are formed at four places at an outer peripheral end portion of the thin portion 126.

As a material for the thin portion 126, in a case in which the thin portion is integrally molded with the mount, similarly to the mount, the thin portion may be formed of metal including stainless steel, aluminum, titanium, or the like, and at least a part of the mount member 16 may be formed of resin such as plastic. As the plastic, a general engineering plastic such as an ABS type, a PVC type, a PC type, a PP type, a PBT type, a PA66 type, or a PPS type may be used, or a fiber-reinforced plastic containing glass fibers or carbon fibers may be used.

In addition to the above, a material having higher flexibility can be selected, and it is more preferable to use a material such as rubber, felt, or film. More preferably, at least one or more of wire mesh, woven steel, or the like are used. For example, the thin portion may be formed of a metal containing stainless steel, aluminum, titanium, copper, silver, gold, tungsten, zinc, or the like, or may be formed of a resin material containing epoxy, acrylic, urethane, silicone, fluorine, or the like in addition to the engineering plastic. The thin portion may be formed of a composite material with a fibrous material such as a nylon-based material, a rayon-based material, a polyamide-based material, a cellulose-based material, a polyurethane-based material, a polypropylene-based material, a polyether-based material, a polyether ester-based material, a polyethylene-based material, a polyphenol-based material, an aramid-based material, a carbon fiber, a glass fiber, a ceramic fiber, or a metal fiber.

The thickness of the thin portion 126 is preferably 10 [mm] or less, more preferably 5 [mm] or less, and still more preferably 1 [mm] or less. The thickness is preferably 0.001 [mm] or more, more preferably 0.01 [mm] or more, and still more preferably 0.1 [mm] or more. In a case in which the thickness is too thin, the yield at the time of processing and molding is lowered. Therefore, the thin portion may have not only a case in which the thickness is thinner than that of the main body portion 124, but also an easily deformable portion having a spring shape, a fold shape, a mesh shape, a woven fabric shape, a porous shape, or the like that is easily elastically deformed or bent.

In this embodiment, as compared with the eighth embodiment, the area to be bonded to the rear glass 12 is increased, so that the mounting stability of the mount member 122 is improved.

### <Tenth Embodiment>

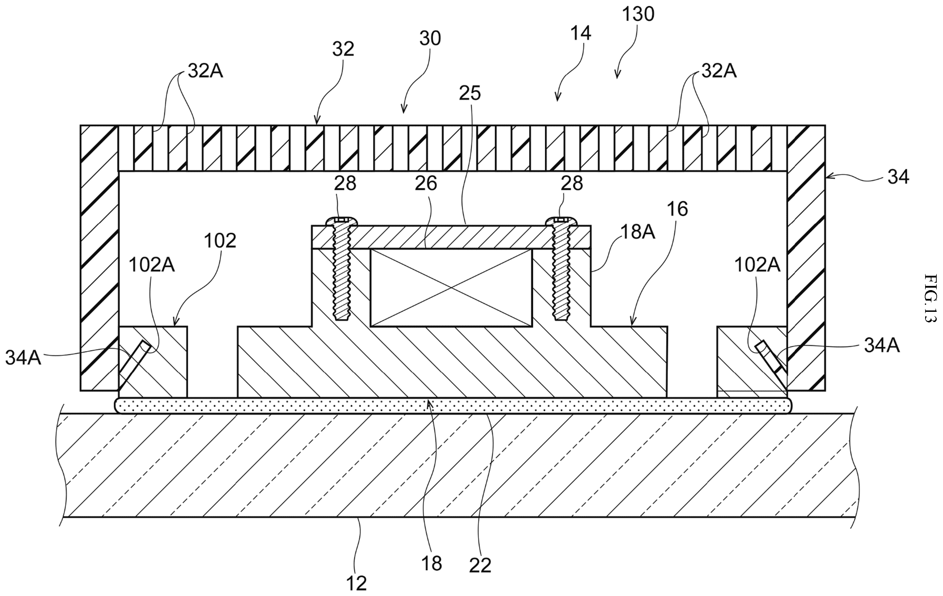

Fig. 13 is an enlarged cross-sectional view of a main part illustrating a cross section of a glass diaphragm module 130 according to a tenth embodiment in an enlarged manner. As illustrated in Fig. 13, in this embodiment, the bracket 102 is provided separately from the mount member 16.

### <Eleventh Embodiment>

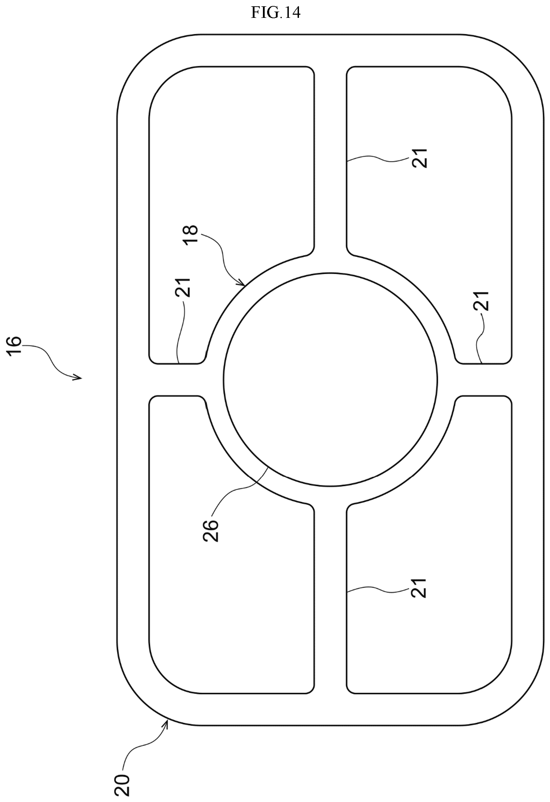

Fig. 14 is a plan view of a mount member in an eleventh embodiment. As illustrated in Fig. 14, in this embodiment, in the mount member 16, the main body portion 18 and the extension portion 20 are connected by a connecting portion 21.

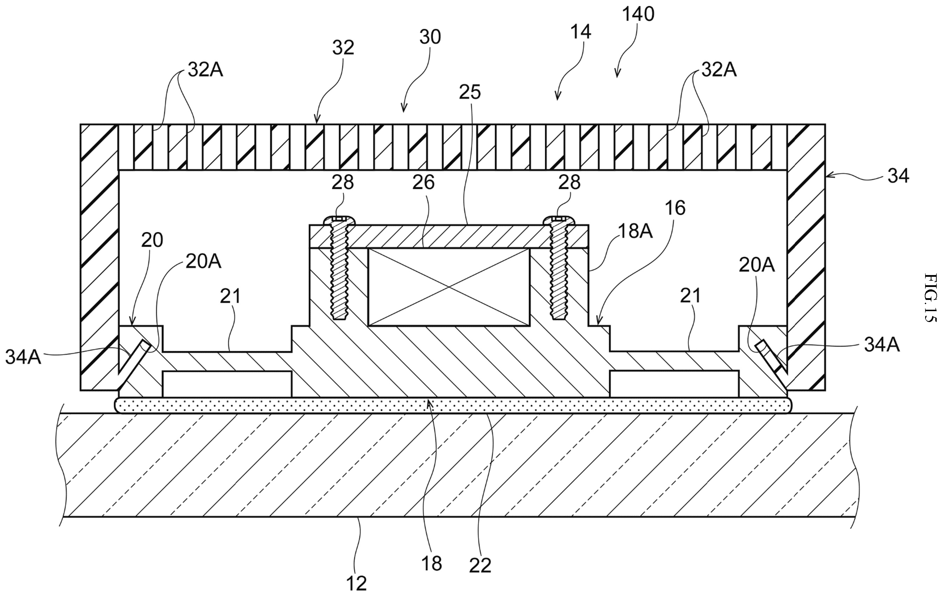

Fig. 15 is an enlarged cross-sectional view of a main part illustrating a cross section of a glass diaphragm module 140 according to an eleventh embodiment in an enlarged manner. As illustrated in Fig. 15, the connecting portion 21 is separated from the rear glass 12.

### <Twelfth Embodiment>

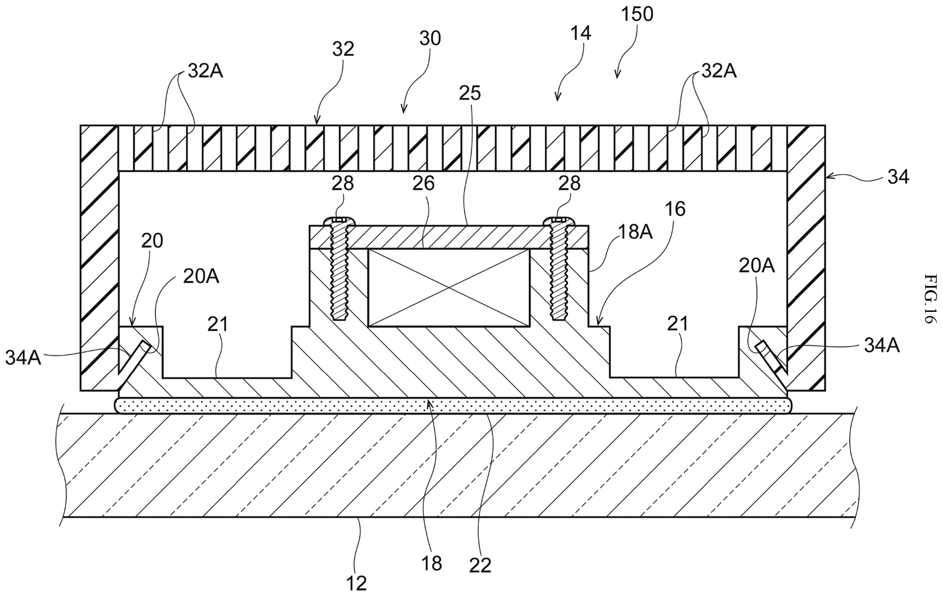

Fig. 16 is an enlarged cross-sectional view of a main part illustrating a cross section of a glass diaphragm module 150 according to a twelfth embodiment in an enlarged manner. As illustrated in Fig. 16, the connecting portion 21 is attached to the rear glass 12 via the first adhesive layer 22.

### <Thirteenth Embodiment>

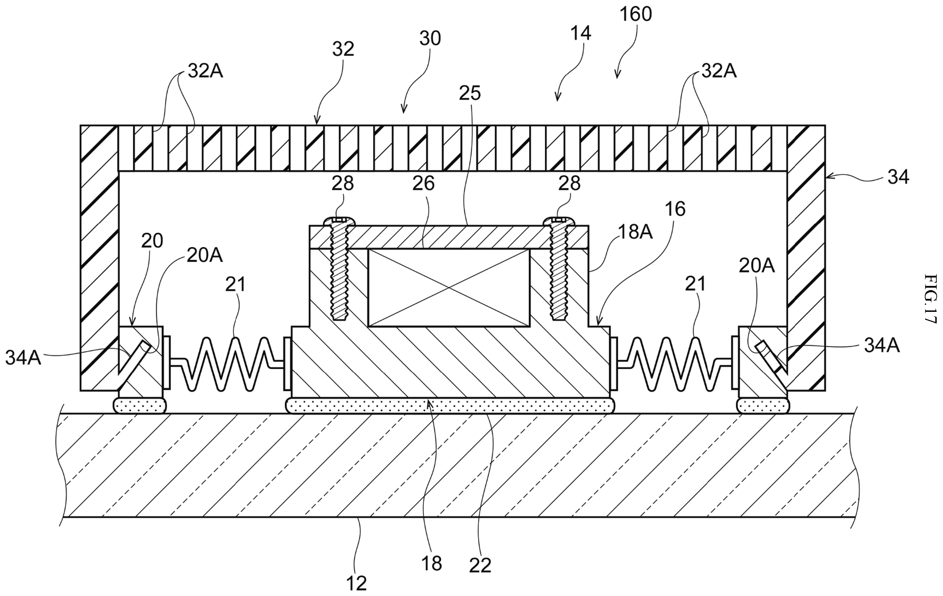

Fig. 17 is an enlarged cross-sectional view of a main part illustrating a cross section of a glass diaphragm module 160 according to a thirteenth embodiment in an enlarged manner. As illustrated in Fig. 17, the connecting portion 21 is separated from the rear glass 12. The connecting portion 21 has a spring shape capable of absorbing vibration from the main body portion 18.

### <Fourteenth Embodiment>

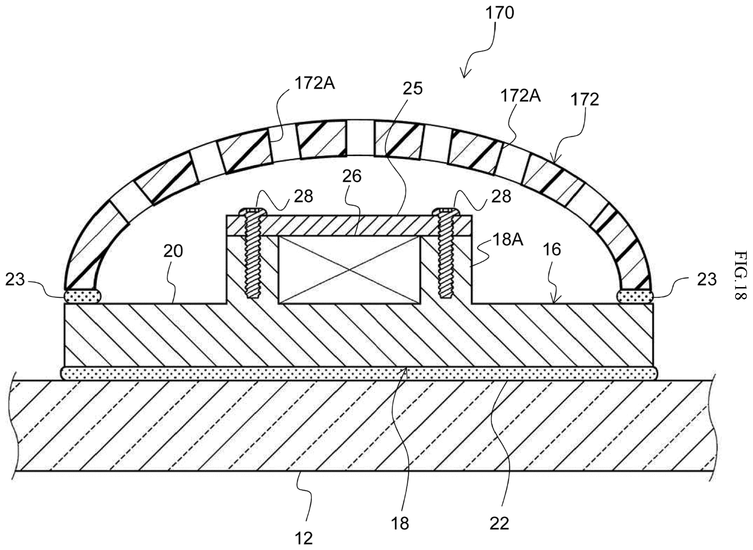

Fig. 18 is an enlarged cross-sectional view of a main part illustrating a cross section of a glass diaphragm module 170 according to a fourteenth embodiment in an enlarged manner. As illustrated in Fig. 18, a cover member 172 of this embodiment is formed in a dome shape.

A material for the cover member 172 is not particularly limited, and the cover member 172 may be formed of metal or resin. The Young's modulus of the cover member 172 is preferably 10⁵ [Pa] or more, more preferably 10⁶ [Pa], and still more preferably 10⁷ [Pa] or more from the viewpoint of securing strength. From the viewpoint of processability and moldability, the Young's modulus of the cover member 172 is preferably 10¹² [Pa] or less.

A plurality of through holes 172A are formed in the cover member 172. The size of the through hole 172A is preferably a gap of 0.1 [mm²] or more, more preferably a gap of 1 [mm²] or more, and still more preferably a gap of 3 [mm²] in order not to inhibit vibration from the rear glass 12 and the vibrator 26. In a case in which the through hole 172A is too large, there is a risk at the time of falling of the actuator, and thus the through hole is preferably 100 [mm²] or less, more preferably 50 [mm²] or less, and still more preferably 30 [mm²] or less.

The penetrating direction of some of the through holes 172A is inclined with respect to the plate thickness direction of the rear glass 12. Specifically, the through hole 172A penetrates perpendicularly to the dome shape, for example. In Fig. 18, the size of the through hole 172A is exaggerated, and the through hole may be formed in such a size that the inside cannot be visually recognized in practice.

The cover member 172 may be formed in a mesh shape. In this case, the opening area can be increased as compared with a configuration in which the plurality of through holes 172A are formed, which is preferable from the viewpoint of heat dissipation and the like. Since the cover member 172 has a dome shape, sound can be diffused in a three-dimensional direction.

### <Fifteenth Embodiment>

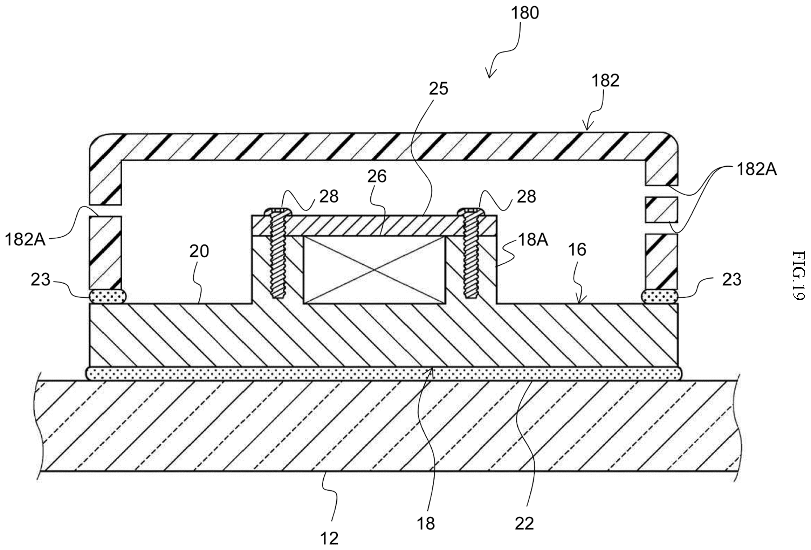

Fig. 19 is an enlarged cross-sectional view of a main part illustrating a cross section of a glass diaphragm module 180 according to a fifteenth embodiment in an enlarged manner. As illustrated in Fig. 19, in a cover member 182 of this embodiment, a through hole 182A is formed not on the main surface but on the side surface. That is, the through hole 182A is formed at a position other than immediately above the vibrator 26 in the cover member 182.

The shape of the through hole 182A is not particularly limited, and for example, may be formed in a slit shape along the peripheral surface of the cover member 182. The side surface of the cover member 182 may be formed in a mesh shape. In this case, since the through hole 182A is not formed immediately above the vibrator 26, the opening area can be increased as compared with a configuration in which the plurality of through holes 172A are formed, which is preferable from the viewpoint of heat dissipation and the like. Since the cover member 172 has a dome shape, sound can be diffused in a three-dimensional direction.

### <Sixteenth Embodiment>

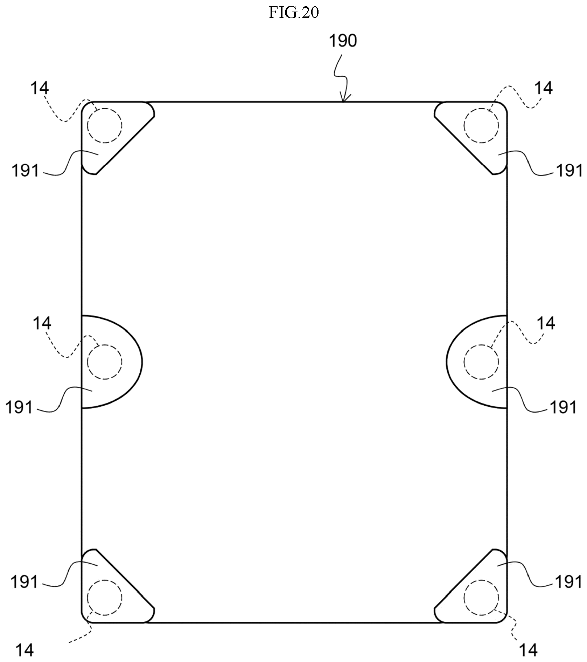

Fig. 20 is a rear view illustrating a roof glass of a vehicle to which a glass diaphragm module according to a sixteenth embodiment is applied. As illustrated in Fig. 20, on the vehicle interior side of a roof glass 190, a decorative member 191 is attached so as to overlap with a region where the vibration module 14 is attached in front view. In this embodiment, the vibration module 14 and the decorative member 191 are provided at the four corners and the central portion of the side of the roof glass 190, but the invention is not limited thereto. The decorative member 191 and the cover member may be provided independently.

Although the glass diaphragm module according to the embodiment has been described above, it is needless to say that the glass diaphragm module can be implemented in various modes without departing from the gist of the invention. For example, the invention may be applied to a roof glass, a windshield, a rear quarter glass, and a front bench glass of a vehicle.

With regard to the above embodiments, the following supplementary descriptions are further disclosed.

### (Supplementary Description 1)

A glass diaphragm module including:
a glass plate constituting a window glass;
a mount member attached to an interior side of the glass plate;
a vibration component attached to the mount member; and
a cover member covering the vibration component from the interior side and having a plurality of through holes formed therein.

### (Supplementary Description 2)

The glass diaphragm module according to supplementary description 1, in which the mount member is provided with a bracket, and
the cover member is attached to the bracket.

### (Supplementary Description 3)

The glass diaphragm module according to supplementary description 1, in which an interior member is provided around the glass plate, and
the cover member is attached to the interior member.

### (Supplementary Description 4)

The glass diaphragm module according to supplementary description 1, in which an interior member is provided around the glass plate, and
the cover member is attached to the mount member and the interior member.

### (Supplementary Description 5)

The glass diaphragm module according to any one of supplementary descriptions 1 to 4, in which the interior member is provided with a guide portion to be fitted to the cover member.

### (Supplementary Description 6)

The glass diaphragm module according to supplementary description 1, in which the cover member is formed integrally with an interior member provided around the glass plate.

### (Supplementary Description 7)

The glass diaphragm module according to any one of supplementary descriptions 1 to 6, in which the mount member includes a main body portion to which the vibration component is attached, and a flexible arm portion extending from the main body portion to an outer peripheral side.

### (Supplementary Description 8)

The glass diaphragm module according to supplementary description 7, in which a plurality of the arm portions are provided at intervals along an outer periphery of the main body portion.

### (Supplementary Description 9)

The glass diaphragm module according to any one of supplementary descriptions 1 to 6, in which the mount member includes a main body portion to which the vibration component is attached, and a flexible thin portion formed in a thin plate shape and extending from the main body portion to an outer peripheral side.

### (Supplementary Description 10)

The glass diaphragm module according to any one of supplementary descriptions 1 to 9, in which the glass plate is a rear glass or a roof glass of a vehicle, and
the cover member is provided on a peripheral edge of the rear glass or a peripheral edge of the roof glass.

### (Supplementary Description 11)

The glass diaphragm module according to any one of supplementary descriptions 1 to 10, in which a size of the through hole formed in the cover member is from 0.1 [mm²] to 100 [mm²].

### (Supplementary Description 12)

The glass diaphragm module according to any one of supplementary descriptions 1 to 11, in which the through hole is also formed in a side surface direction of the cover member.

### (Supplementary Description 13)

The glass diaphragm module according to any one of supplementary descriptions 1 to 12, in which the cover member is formed in a dome shape, and
a penetrating direction of some of the through holes is inclined with respect to a plate thickness direction of the glass plate.

### (Supplementary Description 14)

The glass diaphragm module according to any one of supplementary descriptions 1 to 13, in which the through hole is formed at a position other than a position immediately above the vibration component in the cover member.

The entire contents of the disclosures by Japanese Patent Application No. 2024-008920 are incorporated herein by reference.

All the literature, patent application, and technical standards cited herein are also herein incorporated to the same extent as provided for specifically and severally with respect to an individual literature, patent application, and technical standard to the effect that the same should be so incorporated by reference.

### Description of Reference Numerals

10, 40, 50, 60, 80, 90, 100, 110, 120 Glass diaphragm module
12 Rear glass (glass plate)
16, 52, 62, 112, 122 Mount member
26 Vibrator (vibration component)
30, 68, 82, 92 Cover member
32A, 70A, 82A, 92A Through hole
84, 94 Interior member
102 Bracket
114 Main body portion
116 Arm portion
124 Main body portion
126 Thin portion

## Claims

1. A glass diaphragm module, comprising:
a glass plate configuring a window glass;
a mount member attached to a cabin interior side of the glass plate;
a vibration component attached to the mount member; and
a cover member covering the vibration component from a cabin interior side and having a plurality of through holes formed therein,
wherein the cover member covers only a part of the glass plate.

2. The glass diaphragm module according to claim 1, wherein:
the mount member is provided with a bracket, and
the cover member is attached to the bracket.

3. The glass diaphragm module according to claim 1, wherein the cover member is attached to an interior member provided around the glass plate.

4. The glass diaphragm module according to claim 1, wherein:
an interior member is provided around the glass plate, and
the cover member is attached to the interior member.

5. The glass diaphragm module according to claim 4, wherein the interior member is provided with a guide portion to be fitted to the cover member.

6. The glass diaphragm module according to claim 1, wherein the cover member is formed integrally with an interior member provided around the glass plate.

7. The glass diaphragm module according to claim 1, wherein the mount member includes a main body portion to which the vibration component is attached, and a flexible arm portion extending from the main body portion to an outer peripheral side.

8. The glass diaphragm module according to claim 7, wherein a plurality of the arm portions are provided at intervals along an outer periphery of the main body portion.

9. The glass diaphragm module according to claim 1, wherein the mount member includes a main body portion to which the vibration component is attached, and a flexible thin portion formed in a thin plate shape and extending from the main body portion to an outer peripheral side.

10. The glass diaphragm module according to any one of claims 1 to 9, wherein:
the glass plate is a rear glass or a roof glass of a vehicle, and
the cover member is provided at a peripheral edge of the rear glass or a peripheral edge of the roof glass.

11. The glass diaphragm module according to any one of claims 1 to 9, wherein a size of the through hole formed in the cover member is from 0.1 mm² to 100 mm².

12. The glass diaphragm module according to any one of claims 1 to 9, wherein the through hole is also formed in a side surface direction of the cover member.

13. The glass diaphragm module according to any one of claims 1 to 9, wherein:
the cover member is formed in a dome shape, and
a penetration direction of a portion of the through holes is inclined with respect to a plate thickness direction of the glass plate.

14. The glass diaphragm module according to any one of claims 1 to 9, wherein the through hole is formed at a position other than a position immediately above the vibration component in the cover member.
